# NEUE EUROPÄISCHE PATENTSCHRIFT

(11) **EP 1 157 051 B2**
(45) Veröffentlichungstag und Bekanntmachung des Hinweises auf die Entscheidung über den Einspruch: **21.02.2007**
(45) Hinweis auf die Patenterteilung: 16.07.2003
(21) Anmeldenummer: 00902573.5
(22) Anmeldetag: 07.01.2000
(51) Int. Cl.: C08F 265/00, C08F 2/20, C04B 26/04

(54) **POLYMERDISPERSIONEN**
POLYMER DISPERSIONS
DISPERSIONS POLYMERIQUES

(30) Priorität: 08.01.1999 DE 19900460
(43) Veröffentlichungstag der Anmeldung: 28.11.2001
(73) Patentinhaber: BASF Aktiengesellschaft, 67056 Ludwigshafen (DE)
(72) Erfinder: DREHER, Stefan, D-67433 Neustadt (DE); RECK, Bernd, D-67269 Grünstadt (DE); SEUFERT, Michael, D-67098 Bad Dürkheim (DE); PFAFF, Christian, D-67433 Neustadt (DE)
(74) Vertreter: Kinzebach, Werner
(86) Internationale Anmeldenummer: PCT/EP2000/000091
(87) Internationale Veröffentlichungsnummer: WO 2000/040627

(56) Entgegenhaltungen:
- EP-A- 0 770 640
- EP-A- 0 989 163
- WO-A-94/05896
- WO-A-97/15616
- WO-A-97/15617

## Beschreibung

Die vorliegende Erfindung betrifft eine Polymerdispersion, die in einem wässrigen Medium dispergierte Polymerpartikel aus Einheiten ethylenisch ungesättigter Monomere enthält, ein Verfahren zu ihrer Herstellung und ihre Verwendung als Bindemittel für verschiedene Zwecke.

Polymerdispersionen werden in der Regel durch Verwendung ionischer Tenside stabilisiert, (s. R.J. Hunter "The zeta potential in colloidal science", Academic Press (1981) London). Geeignete Verbindungen hierzu sind z.B. Alkylsulfate, Alkylsulfonate und Alkylphosphonate sowie Alkylarylsulfonate. Die ethoxylierten Derivate dieser Substanzklassen werden ebenfalls häufig verwendet. Neben Tensiden werden auch wasserlösliche Polymere, sog. Schutzkolloide, als Stabilisatoren für Polymerdispersionen eingesetzt (s. D.H. Napper "Polymeric stabilization of colloidal dispersions", Academic Press (1983) London). Die WO-92/00335 beschreibt die Verwendung von Polyvinylalkohol zur Stabilisierung von (Meth)acrylat-Copolymer Dispersionen, wobei 1-5 Gew.-% Schutzkolloid, bezogen auf die Monomermenge, eingesetzt werden. Zur Erhöhung der Latexstabilität werden den Polyvinylalkohol-stabilisierten Dispersionen geringe Mengen ionischer oder nicht-ionischer Tenside zugesetzt. In der DE-A-3111602 werden Styrolacrylat-Copolymer-Dispersionen beschrieben, die ebenfalls Polyvinylalkohol als Schutzkolloid enthalten.

Polymerdispersionen, die unter Verwendung von Tensiden oder Schutzkolloiden stabilisiert sind, zeigen ein charakteristisches Stabilitätsverhalten. Bei Verdünnung mit Wasser behalten sie ihren kolloidalen Charakter, wohingegen die Einwirkung starker Scherkräfte oder hoher Temperaturen in der Regel zur Koagulation führt. Latizes, die mit ionischen Tensiden stabilisiert sind, sind außerdem bei hohen lonenstärken, z.B. nach Zugabe von konzentrierten Elektrolytlösungen, instabil. Für eine Reihe von Verfahren sind jedoch Polymerdispersionen erwünscht, die ein abweichendes Stabilitätsverhalten aufweisen. So wäre bei der Bindung von faserigen Materialien, z.B. von Holz-, Glas-, Textil- oder Naturfasern, ein Latex vorteilhaft, der sich durch einfaches Verdünnen mit Wasser ausfällen läßt, gleichzeitig jedoch eine hohe Scher- und Elektrolytstabilität zeigt. Bei Verwendung der oben beschriebenen herkömmlichen Polymerdispersionen zur Bindung der genannten Materialien müssen in der Regel Fällungsmittel eingesetzt werden. Die EP-A-123234 beschreibt die Verwendung von anionenstabilisierten Styrollatizes zur Bindung von Mineralfaser-Formkörpern unter Einsatz von z.B. Aluminiumsulfatlösungen als Fällungsmittel. In der EP-A-735061 werden kationenstabilisierte Polymerdispersionen beschrieben, die unter Verwendung von Borax-Lösung als Fällungsmittel zur Bindung von faserigen Materialien eingesetzt werden können.

Der vorliegenden Erfindung liegt daher die Aufgabe zugrunde, eine Polymerdispersion bereitzustellen, die durch einfaches Verdünnen mit Wasser koaguliert werden kann und gleichzeitig eine hohe Scher- und Elektrolytstabilität zeigt.

Erfindungsgemäß wird diese Aufgabe durch eine Polymerdispersion gelöst, die in einem wässrigen Medium dispergierte Polymerpartikel aus Einheiten ethylenisch ungesättigter Monomere, einen wasserlöslichen polymeren Polyelektrolyten, der entlang eines polymeren Gerüstes eine Vielzahl ionischer Gruppen einheitlichen Ladungscharakters oder hierzu ionisierbarer Gruppen trägt, und ein ionisches Tensid enthält das eine ionische Gruppe mit zu dem polymeren Polyelektrolyten entgegengesetztem Ladungscharakter oder eine hierzu ionisierbare Gruppe trägt.

Unter "ionischen Gruppen einheitlichen Ladungscharakters" werden Gruppen verstanden, die entweder eine oder mehrere negative Ladungen oder eine oder mehrere positive Ladungen tragen, wobei in einem Molekül des Polyelektrolyten nur Gruppen jeweils eines Ladungstyps vorkommen. Der Begriff "zu ionischen Gruppen ionisierbare Gruppen" bezeichnet ungeladene Gruppen, die in wässriger Lösung leicht, z.B. durch Protonierung oder Deprotonierung, in ionische Gruppen überführt werden können. Im Folgenden bezeichnet der Begriff "anionischer Polyelektrolyt" eine polymere Verbindung, die negativ geladene Gruppen und/oder zu negativ geladenen Gruppen ionisierbare Gruppen trägt. "Kationischer Polyelektrolyt" bezeichnet eine polymere Verbindung, die positiv geladene Gruppen und/oder zu positiv geladenen Gruppen ionisierbare Gruppen trägt. Gleichfalls bezeichnet "kationisches Tensid" ein oberflächenaktives Molekül, das eine positiv geladene Gruppe oder eine zu einer solchen ionisierbare Gruppe trägt.

In den erfindungsgemäßen Zusammensetzungen liegen demzufolge entweder anionische Polyelektrolyte in Verbindung mit kationischen Tensiden oder kationische Polyelektrolyte in Verbindung mit anionischen Tensiden vor. Die erfindungsgemäßen Zusammensetzungen können darüber hinaus nicht-ionische Tenside, z.B. in einer Menge von 1-50 Gew.-%, vorzugsweise weniger als 30 Gew.-%, bezogen auf das ionische Tensid, enthalten..

Die erfindungsgemäßen Zusammensetzungen sind durch radikalische Polymerisation wenigstens eines ethylenisch ungesättigten Monomers in Gegenwart des wasserlöslichen polymeren Elektrolyten und des ionischen Tensids erhältlich. Demzufolge betrifft die Erfindung auch ein Verfahren zur Herstellung einer Polymerdispersion, bei dem in einem wässrigen Medium wenigstens ein ethylenisch ungesättigtes Monomer in Gegenwart einer Kombination eines polymeren Polyelektrolyten, der entlang eines polymeren Gerüstes eine Vielzahl ionischer Gruppen einheitlichen Ladungscharakters oder hierzu ionisierbarer Gruppen trägt, und eines ionischen Tensids, das eine ionische Gruppe mit zu dem polymeren Polyelektrolyten entgegengesetztem Ladungscharakter oder eine hierzu ionisierbare Gruppe trägt, radikalisch polymerisiert wird.

Es ist vorteilhaft, wenn die Polymerisation des ethylenisch ungesättigten Monomers in Gegenwart sowohl des polymeren Polyelektrolyten als auch des entgegengesetzt geladenen Tensids erfolgt. Wird nur der Polyelektrolyt oder das ionische Tensid bei der Polymerisation vorgelegt, und ein entgegengesetzt geladenes Tensid bzw. Polyelektrolyt nach dem Ende der Polymerisation dazugegeben, so kann es zur Koagulation der Polymerdispersion kommen.

Das Gemisch aus Polyelektrolyt und entgegengesetzt geladenem Tensid muß im wässrigen Medium löslich sein und soll keine wasserunlöslichen Bestandteile, wie Koazervate, bilden. Es ist bevorzugt, dass der Polyelektrolyt einen zahlenmittleren Polymerisationsgrad von weniger als 2000, insbesondere weniger als 1000, aufweist. Die Untergrenze des Polymerisationsgrades des Polyelektrolyten liegt im Allgemeinen bei 10, vorzugsweise bei 20.

Der erfindungsgemäß verwendete Polyelektrolyt weist entweder anionischen oder kationischen Ladungscharakter auf. Als anionische Polyelektrolyte sind solche Polymere bevorzugt, die aus Einheiten ethylenisch ungesättigter Monomere aufgebaut sind und 20-100 Gew.-%, vorzugsweise 50 bis 100, besonders bevorzugt 80 bis 100 Gew.-%, bezogen auf die gesamten Monomereinheiten, eines oder mehrerer Monomere enthalten, die ausgewählt sind unter
ethylenisch ungesättigten C₃-C₁₀-Monocarbonsäuren, deren Alkalimetallsalzen und/oderAmmoniumsalzen, z.B. Acrylsäure, Methacrylsäure, Dimethylacrylsäure, Ethylacrylsäure, Allylessigsäure oder Vinylessigsäure;
ethylenisch ungesättigten C₄-C₈-Dicarbonsäuren, deren Halbestern, Anhydriden, Alkalimetallsalzen und/oder Ammoniumsalzen, z.B. Maleinsäure, Fumarsäure, Itakonsäure, Mesakonsäure, Methylenmalonsäure, Citrakonsäure. Anionische Polyelektrolyte können auch ausgehend von ethylenisch ungesättigten Mono- und Dicarbonsäureanhydriden, gegebenenfalls im Gemisch mit den erwähnten Carbonsäuren, erhalten werden. Die Anhydridfunktionen werden unter den Polymerisationsbedingungen, beispielsweise bei der Lösungs- oder Emulsionspolymerisation im wässrigen Medium, oder im Anschluß an die Polymerisation durch Umsetzung mit einer Säure oder Base in Carbonsäuregruppen überführt. Brauchbare ethylenisch ungesättigte Carbonsäureanhydride sind insbesondere Maleinsäureanhydrid, Itakonsäureanhydrid oder Methylmalonsäureanhydrid;
ethylenisch ungesättigte Sulfonsäuren, z.B. Allylsulfonsäure, Styrolsulfonsäure, 2-Acrylamido-2-methylpropansulfonsäure, Methallylsulfonsäure, Vinylsulfonsäure, Acrylsäure-3-sulfopropylester oder Methacrylsäure-3-sulfopropylester;
ethylenisch ungesättigten Schwefelsäurehalbestern wie Vinylsulfat;
ethylenisch ungesättigten Phosphonsäuren, z.B. Vinylphosphonsäure, Allylphosphonsäure oder Acrylamidomethylpropanphosphonsäure.

Bis zu 80 Gew.-%, vorzugsweise bis zu 50 Gew.-%, besonders bevorzugt bis zu 20 Gew.-%, der Monomereinheiten des Polyelektrolyten können aus einem oder mehreren nicht-ionischen bzw. nicht-ionisierbaren Monomeren bestehen, die ausgewählt sind unter C₁-C₂₀-Alkyl- oder Hydroxyalkylestern von ethylenisch ungesättigten C₃-C₁₀-Monocarbonsäuren oder C₄-C₈-Dicarbonsäuren, z.B. Methylacrylat, Ethylacrylat, n-Butylacrylat, Methylmethacrylat, Stearylacrylat, Maleinsäurediethylester, Hydroxyethylacrylat, Hydroxypropylacrylat, Hydroxyethylmethacrylat; (Meth) acrylsäureestern von alkoxylierten C₁-C₁₈-Alkoholen, die mit 2-50 mol Ethylenoxid, Propylenoxid, Butylenoxid oder Mischungen davon umgesetzt sind; Amiden, und N-substituierten Amiden von monoethylenisch ungesättigten C₃-C₁₀-Monocarbonsäuren oder C₄-C₈-Dicarbonsäuren, z.B. Acrylamid, Methacrylamid, N-Alkylacrylamide oder N,N-Dialkylacrylamide mit jeweils 1-18 C-Atomen in der Alkylgruppe wie N-Methylacrylamid, N,N-Dimethylacrylamid, Maleinsäuremonomethylhexylamid oder Acrylamidoglycolsäure; Acrylnitril und Methacrylnitril; Vinylestern, z.B. Vinylformiat, Vinylacetat, Vinylpropionat, wobei diese nach auch ganz oder teilweise verseift vorliegen können; N-Vinylverbindungen, z.B. N-Vinylpyrrolidon, N-Vinylcaprolactam, N-Vinylformamid, N-Vinyl-N-methylformamid, 1-Vinylimidazol oder 1-Vinyl-2-methylimidazol; Vinylethern von alkoxylierten C₁-C₁₈-Alkoholen und Vinylethern von Polyalkylenoxiden wie Polyethylenoxid, Polypropylenoxid oder Polybutylenoxid; linearen, verzweigten oder cyclischen Olefinen und Diolefinen, z.B. Ethen, Propen, Buten, Butadien, 1-Penten, Cyclopenten, 1-Hexen, 1-Hepten, Styrol oder dessen Derivate, wie α-Methylstyrol, Inden, Dicyclopentadien oder reaktive Doppelbindungen tragenden höheren Olefinen, wie Oligopropen und Polyisobuten.

Die anionischen Polyelektrolyte können in der Säureform oder in teilneutralisierter oder vollständig neutralisierter Form eingesetzt werden. Zur Neutralisation sind Basen, wie Alkali- oder Erdalkalihydroxide, wie NaOH oder KOH, Ammoniak, höhere aliphatische und aromatische Amine, Alkanolamine, geeignet.

Außerdem sind als anionische Polyelektrolyte anionisch modifizierte Polysaccharide, wie Carboxymethylcellulose oder Dextransulfat bzw. Salze davon geeignet. Besonders brauchbare anionische Polyelektrolyte sind Copolymere aus Maleinsäure und Acrylsäure.

Unter den kationischen Polyelektrolyten sind solche Polymere bevorzugt, die aus Einheiten ethylenisch ungesättigter Monomere aufgebaut sind und 20-100 Gew.-%, vorzugsweise 50 bis 100 Gew.-%, besonders bevorzugt 80 bis 100 Gew.-%, bezogen auf die gesamten Monomereinheiten, Einheiten eines oder mehrerer Monomere enthalten, die ausgewählt sind unter quaternäre Ammoniumgruppen oder protonierbare Aminogruppen tragenden ethylenisch ungesättigten Monomeren. Unter "quaternären Ammoniumgruppen" werden Ammoniumionen verstanden, die am Stickstoffatom vier von H verschiedene Reste tragen. "Protonierbare Aminogruppen" bezeichnen protonierbare bzw. quaternierbare Amine mit 1 bis 3 von H verschiedenen Resten am Stickstoffatom.

Quaternäre Ammoniumgruppen tragende ethylenisch ungesättigte Monomere können durch Umsetzung der entsprechenden Aminogruppen enthaltenden Monomere mit Quaternisierungsmitteln erhalten werden. Geeignete Quaternisierungsmittel sind übliche Alkylierungsmittel, z.B. Dimethylsulfat, Diethylsulfat, Methylchlorid, Ethylchlorid oder Benzylchlorid. Ethylenisch ungesättigte Monomere mit protonierbaren Amingruppen sind z.B. Amino-C₂-C₆-alkyl (meth)acrylate oder vinyl- oder allylsubstituierte stickstoffhaltige Heteroaromaten. Als Beispiele lassen sich Dimethylaminoethylacrylat-hydrochlorid, Diallyldimethylammoniumchlorid, Dimethylaminoethylacrylat-methosulfat, Dimethylaminopropylmethacrylamid-methochlorid, Dimethylaminopropylmethacrylamid-methosulfat, Vinylpyridiniumsalze oder 1-Vinylimidazoliumsalze anführen.

Bis zu 80 Gew.-%, vorzugsweise bis zu 50 Gew.-%, besonders bevorzugt bis zu 20 Gew.-%, der Monomereinheiten des kationischen Polyelektrolyten können dabei aus den vorstehend genannten nicht-ionischen bzw. nicht-ionisierbaren Monomeren bestehen. Die kationischen Polyelektrolyte können, soweit sie protonierbare Aminogruppen tragen, in Basenform oder in teilweise oder vollständig protonierter Form eingesetzt werden. Zur Protonierung sind beispielsweise Mineralsäuren, wie Salzsäure, Schwefelsäure oder Salpetersäure, geeignet.

Die Herstellung der Polyelektrolyte erfolgt zweckmäßigerweise durch radikalisch initiierte Polymerisation, insbesondere Lösungspolymerisation. Die Durchführung der Polymerisation und Hilfsstoffe sind nachstehend im Zusammenhang mit der Herstellung der dispergierten Polymerpartikel beschrieben.

Die erfindungsgemäße Zusammensetzung enthält ferner ein Tensid, das eine zu dem Polyelektrolyten entgegengesetzte Ladung trägt. Geeignete anionische Tenside sind z.B.
Alkylsulfate, wie die Fettalkoholsulfate;
Schwefelsäurehalbester ethoxylierter Alkylalkohole, wie die Fettalkoholpolyglycolethersulfate;
Schwefelsäurehalbester ethoxylierter C₄-C₉-Alkylphenole; Alkylsulfonate, wie die Paraffinsulfonate;
Alkenylsulfonate;
Alkylarylsulfonate, wie Alkylbenzolsulfonate; Alkylglycerylethersulfonate;
Alkylphosphate und Dialkylphosphate;
Alkylarylphosphate;
Alkyl-, Alkenyl- oder Alkylarylphosphonate;
Mono- und Dialkylester der Sulfobernsteinsäure;
ein- oder mehrfach kernsulfonierte Monoalkylbiphenylether;
Methylcarboxylate ethoxylierter Alkylalkohole, wie die Fettalkoholpolyglycolethermethylcarboxylate;
C₆-C₂₂-Carbonsäuren.

In der vorstehenden Aufzählung steht Alkyl bzw. Alkenyl, soweit nicht anders angegeben, für C₆-C₂₂-, vorzugsweise C₁₂-C₁₈-Alkyl bzw. -Alkenyl. Soweit ethoxylierte Verbindungen aufgeführt sind, beträgt der Ethoxylierungsgrad 1 bis 100, vorzugsweise 2 bis 50 EO-Einheiten.

Bevorzugte anionische Tenside sind ethoxylierte Alkylsulfate oder-sulfonate sowie ethoxylierte Alkylarylsulfate oder -sulfonate.

Die anionischen Tenside können in Form der Alkalimetallsalze, vorzugsweise des Natrium- oder Kaliumsalzes, oder in Form von Ammoniumsalzen sowie als lösliche Salze organischer Basen, wie Mono-, Di- oder Triethanol- oder anderer substituierter Amine, wie Triethylamin, Pyridin, Piperidin oder Morpholin, vorliegen.

Als kationische Tenside können solche verwendet werden, die quaternäre Ammoniumgruppen oder protonierbare Aminogruppen enthalten.

Bevorzugte kationische Tenside sind quaternäre Ammoniumsalze oder Amine bzw. deren protonierte Formen, die jeweils mindestens eine Kohlenwasserstoffkette von wenigstens 6 Kohlenstoffatomen umfassen. Die Kohlenwasserstoffkette kann z.B. bis zu 40 Kohlenstoffatome aufweisen. Sie kann gesättigt oder einfach oder mehrfach ungesättigt sein.
Amnoniumsalze der allgemeinen Formel

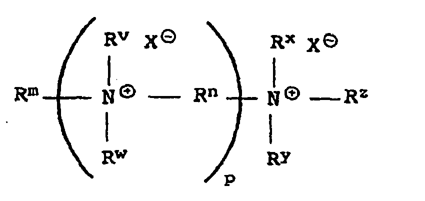

sind bevorzugt, worin R^{m} für C₆-C₂₂-Alkyl, C₆-C₂₂-Alkenyl, Aryl-C₆-C₂₂-Alkyl oder Aryl-C₆-C₂₂-Alkenyl steht, wobei der Alkenylrest 1 bis 3 Doppelbindungen aufweisen kann,
R^{v}, R^{w}, R^{x}, R^{y} und R^{z}, die gleich oder verschieden sein können, für -(CHRCH₂-O)̵ₙH, wobei R für H oder CH₃ und n für 1 bis 25 steht, oder C₁-C₄-Alkyl oder C₅-C₇-Cycloalkyl stehen, das gegebenenfalls durch eine oder mehrere Hydroxylgruppen substituiert ist, oder die für R^{m} angegebenen Bedeutungen besitzen, oder R^{x} und
R^{y} gemeinsam mit dem Stickstoffatom, an das sie gebunden sind, einen gesättigten 5- bis 8-gliedrigen Ring bilden, der gegebenenfalls weitere Heteroatome aufweisen kann, die unter O, N und S ausgewählt sind,
   oder R^{x}, R^{y} und R^{z} gemeinsam mit dem Stickstoffatom, an das sie gebunden sind, für einen 5- bis 8-gliedrigen aromatischen Ring stehen;
Rⁿ für C₁-C₄-Alkylen, vorzugsweise Propylen, steht;
X für ein Anion, z.B. ein Halogenid, wie Cl⁻ oder Br⁻, oder Sulfat, Nitrat; Methylsulfat, Ethylsulfat steht; und
p die Werte 0 oder 1 einnehmen kann.
Aryl steht vorzugsweise für Phenyl.

Geeignet sind z.B. C₈-C₁₈-Alkyltrimethylammoniumchloride oder -bromide, Ditalgdimethylammoniumchlorid oder Laurylbenzyldimethylammoniumchlorid. Weitere Beispiele sind Piperidiniumgruppen enthaltende kationische Tenside und Pyridinium-, Imidazolinium-, Oxazolinium- oder Pyrimidingruppen enthaltende kationische Tenside, z.B. N-Laurylpyridiniumchlorid.

Weiter sind Amine der allgemeinen Formel 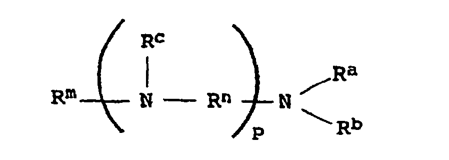 bevorzugt, in der
R^{m} die oben angegebene Bedeutung besitzt,
R^{a}, R^{b} und R^{c}, die gleich oder verschieden sein können, für H, -(CHRCH₂-O)̵ₙH, wobei R für H oder CH₃ und n für 1 bis 25 steht, oder C₁-C₄-Alkyl oder C₅-C₇-Cycloalkyl stehen, das gegebenenfalls durch eine oder mehrere Hydroxylgruppen substituiert ist, oder die für R^{m} angegebenen Bedeutungen besitzen, oder R^{a} und R^{b} gemeinsam mit dem Stickstoffatom, an das sie gebunden sind, einen gesättigten 5- bis 8-gliedrigen Ring bilden, der gegebenenfalls weitere Heteroatome aufweisen kann, die unter O, N und S ausgewählt sind, Rⁿ für C₁-C₄-Alkylen, vorzugsweise Propylen, steht; und
p die Werte 0 oder 1 einnehmen kann.

Hierzu zählen natürliche C₈-C₁₈-Mono- oder -Dialkylamine, z.B. Mono- oder Dioleyl-, -Cocos- oder -Talgfett oder synthetische C₈-C₁₈-Mono- oder Dialkylamine. Ebenfalls geeignet sind ethoxylierte oder propoxylierte Derivate dieser Verbindungen. Beispiele für derartige Substanzen sind unter der Bezeichnung NORAMOX und DINORAMOX (Fa. ELF-ATOCHEM) sowie LUTENSOL FA (Fa. BASF AG) vertriebene Handelsprodukte. Die Amine können durch Mineralsäuren, wie Salzsäure, Schwefelsäure, Salpetersäure, starke organische Säuren, wie Chloressigsäure, oder polymere Säuren, z.B. Polyacrylsäure oder deren Copolymere, protoniert werden.

Die erfindungsgemäßen Zusammensetzungen können wahlweise außerdem ein nicht-ionisches Tensid enthalten. Geeignete Vertreter dieser Klasse sind z.B. Polyalkylenoxid-Addukte, wie Ethylenoxid-Propylenoxid-Blockcopolymerisate, Fettsäureester von Polyhydroxyverbindungen, z.B. Sorbitanalkylester, Glycerinalkylester, Fettsäurealkylolamidooxethylate sowie Anlagerungsprodukte von 3-40 mol, vorzugsweise 4-20 mol, Ethylenoxid an Fettalkohole, Alkylphenole, Fettsäuren, Fettamine, Fettsäureamide, oder Alkansulfonamide. Auch nicht-ionische Tenside vom Typ der Aminoxide oder Sulfoxide sind geeignet.

Besonders stabile Polymerdispersionen werden erhalten, wenn das ionische Tensid und - soweit vorhanden - das nicht-ionische Tensid ethoxylierte Tenside darstellen. Der Ethoxylierungsgrad beträgt vorzugsweise 2 bis 50. Im einzelnen sind bevorzugt ethoxylierte Alkyl-, Alkenyl- oder Alkylarylsulfonate und -sulfate sowie ethoxylierte C₈-C₁₈-Mono- oder Dialkylamine.

Die erfindungsgemäßen Zusammensetzungen enthalten in einem wässrigen Medium dispergierte Polymerpartikel aus Einheiten ethylenisch ungesättigter Monomere, zu deren Herstellung können alle radikalisch polymerisierbaren Monomere eingesetzt werden. Im Allgemeinen ist das Polymerisat aufgebaut aus: 60-100 Gew.-%, vorzugsweise 80-100 Gew.-%, bezogen auf das Gesamtgewicht der Monomere, eines ethylenisch ungesättigten Monomers ohne funktionelle Gruppen (Hauptmonomer) und 0-40 Gew.-%, vorzugsweise 0-20 Gew.-%, wenigstens eines funktionelle Gruppen aufweisenden Monomers (Comonomer).

Das Hauptmonomer ist vorzugsweise ausgewählt unter Estern aus vorzugsweise 3-6 C-Atomen aufweisenden, α,β-monoethylenisch ungesättigten Mono- oder Dicarbonsäuren, wie Acrylsäure, Maleinsäure, Fumarsäure und Itakonsäure mit C₁-C₁₂-, vorzugsweise C₁-C₈- und insbesondere C₁-C₅-Alkanolen. Derartige Ester sind insbesondere Methyl-, Ethyl-, n-Butyl, iso-Butyl-, tert-Butyl-, n-Pentyl, iso-Pentyl- und 2-Ethylhexylacrylat und -methacrylat; vinylaromatische Verbindungen wie Styrol, α-Methylstyrol, o-Chlorstyrol oder Vinyltoluole; Vinylestern von C₁-C₁₈-Mono- oder Dicarbonsäuren, wie Vinylacetat, Vinylpropionat, Vinyl-n-butyrat, Vinyllaurat und Vinylstearat; Butadien, Propen und Ethen.

Besonders bevorzugte Hauptmonomere sind Styrol, Methylmethacrylat, n-Butylacrylat, Ethylacrylat, 2-Ethylhexylacrylat, Butadien und Vinylacetat.

Geeignete Comonomere sind insbesondere: α,β-ungesättigte Mono- oder Dicarbonsäuren sowie deren Salze oder Anhydride wie z.B. Acrylsäure, Methacrylsäure, Maleinsäure, Maleinsäureanhydrid und Itakonsäure; lineare 1-Olefine, verzweigtkettige 1-Olefine oder cyclische Olefine, wie z.B. Buten, Isobuten, Penten, Cyclopenten, Hexen oder Cyclohexen. Des weiteren sind auch unter Metallocenkatalyse hergestellte Oligoolefine mit endständiger Doppelbindung, wie z.B. Oligopropen oder Oligohexen geeignet; Acrylnitril, Methacrylnitril; Vinyl- und Allylalkylether mit 1-40 Kohlenstoffatomen im Alkylrest, wobei der Alkylrest noch weitere Substituenten wie eine Hydroxylgruppe, eine Amino- oder Diaminogruppe oder eine bzw. mehrere Alkoxylatgruppen tragen kann, wie z.B. Methylvinylether, Ethylvinylether, Propylvinylether und 2-Ethylhexylvinylether; Acrylamide und alkylsubstituierte Acrylamide, wie z.B. Acrylamid, Methacrylamid, N,N-Dimethylacrylamid und N-Methylolmethacrylamid; sulfongruppenhaltige Monomere, wie z. B. Allylsulfonsäure, Styrolsulfonsäure, Vinylsulfonsäure, 2-Acrylamido-2-methylpropansulfonsäure oder deren entsprechende Alkali- oder Ammoniumsalze; C₁-C₄-Hydroxyalkylester von C₃-C₆-Mono- oder Dicarbonsäuren (siehe oben), insbesondere der Acrylsäure, Methacrylsäure oder Maleinsäure, oder deren mit 2-50 mol Ethylenoxid, Propylenoxid, Butylenoxid oder Mischungen davon alkoxylierte Derivate oder Ester von mit 2-50 mol Ethylenoxid, Propylenoxid, Butylenoxid oder Mischungen davon alkoxylierten C₁-C₁₈-Alkoholen mit den erwähnten Säuren, wie z.B. Hydroxyethylacrylat, Hydroxyethylmethacrylat, Hydroxypropylacrylat oder Methylpolyglycolmethacrylat; Vinylphosphonsäure, Vinylphosphonsäuredimethylester u.a. phosphorhaltige Monomere; Alkylaminoalkyl(meth)acrylate oder Alkylamino (meth)acrylamide oder deren Quaternisierungsprodukte, wie z.B. 2-(N,N-Dimethylamino)-ethylmethacrylat oder 2-(N, N,N-Trimethylammonium)-ethylmethacrylat-chlorid; Allylester von C₁-C₃₀-Monocarbonsäuren; N-Vinylverbindungen wie N-Vinylformamid, N-Vinylpyrrolidon, N-Vinylimidazol, N-Vinylcarbazol oder N-Vinylcaprolactam; Diallyldimethylammoniumchlorid, Vinylidenchlorid, Vinylchlorid, Acrolein, Methacrolein; 1,3-Diketogruppen enthaltende Monomere wie z.B. Acetoacetoxyethyl(meth)acrylat oder Diacetonacrylamid, harnstoffgruppenhaltige Monomere, wie Ureidoethyl (meth)acrylat, Acrylamidoglycolsäure, Methacrylamidoglykolatmethylether; Silylgruppen enthaltende Monomere, wie z.B. Trimethoxysilylpropylmethacrylat; Glycidylgruppen enthaltende Monomere, wie z.B. Glycidylmethacrylat.

Besonders bevorzugte Comonomere sind Acrylsäure, Methacrylsäure, Acrylnitril, Acrylamid, Hydroxyethylacrylat, Hydroxyethylmethacrylat und Glycidylmethacrylat.

Die Polyelektrolyte und das ionische Tensid werden vorzugsweise in einem Gewichtsverhältnis auf Feststoffbasis von 20:1 bis 1:1, insbesondere 10:1 bis 2:1, eingesetzt. Der zahlenmittlere Polymerisationsgrad des Polyelektrolyten ist vorzugsweise < 2000, insbesondere < 1000. Er ist im Allgemeinen größer als 10. Das Gewichtsverhältnis von Polyelektrolyt zu Polymerpartikeln beträgt vorzugsweise 5:1 bis 1:10, insbesondere 1:1 bis 1:3. Soweit ein nicht-ionisches Tensid mitverwendet wird, wird dieses vorzugsweise in einer Menge von 1-50 Gew.-%, bezogen auf das ionische Tensid, insbesondere weniger als 30 Gew.-%, eingesetzt.

Bezogen auf das Gesamtgewicht der Polymerdispersion enthält diese in der Regel etwa 5 bis 40 Gew.-% Polyelektrolyt und 2,5 bis 15 Gew.-% ionisches Tensid.

Die Herstellung der erfindungsgemäßen Polymerdispersion erfolgt vorzugsweise durch wässrige Emulsionspolymerisation, wobei eine absatzweise, semikontinuierliche oder kontinuierliche Fahrweise möglich ist. Es erwies sich als vorteilhaft, den polymeren Polyelektrolyten und das ionische Tensid zumindest teilweise, insbesondere im wesentlichen vollständig, vorzulegen und die Monomere zur Herstellung der Polymerpartikel in Substanz oder in gelöster oder emulgierter Form dazuzugeben. Bevorzugt ist die Zugabe als Monomeremulsion, die durch eine Teilmenge des ionischen Tensids, z.B. 5-50 Gew.-% der Gesamtmenge, oder durch das fakultativ vorhandene nicht-ionische Tensid stabilisiert ist.

Die Polymerisation wird vorzugsweise in Gegenwart von Radikale bildenden Verbindungen (Initiatoren) durchgeführt. Man benötigt von diesen Verbindungen vorzugsweise 0,05-10, besonders bevorzugt 0,2-5 Gew.-%, bezogen auf die bei der Polymerisation eingesetzten Monomeren.

Geeignete Polymerisationsinitiatoren sind beispielsweise Peroxide, Hydroperoxide, Peroxodisulfate, Percarbonate, Peroxoester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxodicarbonat, Dilauroylperoxid, Methylethylketonperoxid, Di-tert-Butylperoxid, Acetylacetonperoxid, tert-Butylhydroperoxid, Cumolhydroperoxid, tert-Butylperneodecanoat, tert-Amylperpivalat, tert-Butylperpivalat, tert-Butylperneohexanoat, tert-Butylper-2-ethylhexanoat, tert-Butylperbenzoat, Lithium-, Natrium-, Kalium- und Ammoniumperoxodisulfat, Azodiisobutyronitril, 2,2'-Azobis(2-amidinopropan)dihydrochlorid, 2-(Carbamoylazo)isobutyronitril und 4,4-Azobis(4-cyanovaleriansäure). Auch die bekannten Redox-Initiatorsysteme wie z.B. H₂O₂/Ascorbinsäure oder t-Butylhydroperoxid/Natriumhydroxymethansulfinat, können als Polymerisationsinitiatoren verwendet werden.

Die Initiatoren können allein oder in Mischung untereinander angewendet werden, z.B. Mischungen aus Wasserstoffperoxid und Natriumperoxodisulfat. Für die Polymerisation in wässrigem Medium werden bevorzugt wasserlösliche Initiatoren eingesetzt.

Um Polymerisate mit niedrigem mittleren Molekulargewicht herzustellen, ist es oft zweckmäßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, tert-Butylmercaptan, n-Octylmercaptan, n-Dodecylmercaptan und tert-Dodecylmercaptan, Hydroxylammoniumsalze wie Hydroxylammoniumsulfat, Ameisensäure, Natriumbisulfit oder Isopropanol. Die Polymerisationsregler werden im Allgemeinen in Mengen von 0,05-5 Gew.-%, bezogen auf die Monomere, eingesetzt.

Um höhermolekulare Copolymerisate herzustellen, ist es oft zweckmäßig, bei der Polymerisation in Gegenwart von Vernetzern zu arbeiten. Solche Vernetzer sind Verbindungen mit zwei oder mehreren ethylenisch ungesättigten Gruppen, wie beispielsweise Diacrylate oder Dimethacrylate von mindestens zweiwertigen gesättigten Alkoholen, wie z.B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure- und Methacrylsäureester von Alkoholen mit mehr als zwei OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200-9000.

Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich weiterhin Vinylacrylat, Vinylmethacrylat, Vinylitaconat, Adipinsäuredivinylester, Butandioldivinylether, Trimethylolpropantrivinylether, Allylacrylat, Allylmethacrylat, Pentaerithrittriallylether, Triallylsaccharose, Pentaallylsaccharose, Pentaallylsucrose, Methylenbis(meth)acrylamid, Divinylethylenharnstoff, Divinylpropylenharnstoff, Divinylbenzol, Divinyldioxan, Triallylcyanurat, Tetraallylsilan, Tetravinylsilan und Bis- oder Polyacrylsiloxane (z.B. Tegomere® der Th. Goldschmidt AG). Die Vernetzer werden vorzugsweise in Mengen von 10 ppm bis 5 Gew.-%, bezogen auf die zu polymerisierenden Monomere, eingesetzt.

Die Herstellung der Polymerdispersion erfolgt in der Regel in Wasser als Dispergiermedium. Es können jedoch auch mit Wasser mischbare organische Lösungsmittel, wie Alkohole und Ketone, beispielsweise Methanol, Ethanol, n-Propanol, Isopropanol, n-Butanol, Aceton oder Methylethylketon, bis zu einem Anteil von etwa 30 Vol.-% enthalten sein. Es entsteht eine stabile, feinteilige Polymerisatdispersion. Die Teilchengrößen können nach den für wässrige Emulsionspolymerisate üblichen Verfahren bestimmt werden. Zum Beispiel liegen die mittels quasielastischer Lichtstreuung bestimmten Teilchengrößen im Allgemeinen im Bereich von 30-1500 nm, vorzugsweise 40-500 nm. Die Teilchengrößenverteilung kann monomodal oder polymodal sein.

Die dispergierten Polymerpartikel weisen im Allgemeinen ein gewichtsmittleres Molekulargewicht von 1000 bis 5 000 000, vorzugsweise 5000 bis 2 000 000, auf.

Die erfindungsgemäßen Zusammensetzungen haben im Allgemeinen einen Gehalt an nichtflüchtigen Anteilen (Feststoffgehalt) im Bereich von 20-70 Gew.-%, insbesondere 25-55 Gew.-%. Die Viskosität der erfindungsgemäßen Zusammensetzung liegt (bei einem Feststoffgehalt von 40 Gew.-%) im Bereich von 10-3000 mPas, gemessen mit einem Rotationsviskosimeter gemäß DIN 53019 bei 23°C und einer Schergeschwindigkeit von 250 s⁻¹. Bevorzugt sind Viskositäten von 20-2000 mPas, insbesondere von 20-1000 mPas.

Die erfindungsgemäßen Polymerdispersionen zeichnen sich durch hohe Scher- und Elektrolytstabilität aus. Die dispergierten Polymerpartikel lassen sich in der Regel durch einfaches verdünnen der Polymerdispersion mit einem wässrigen Medium, wie Wasser, ausfällen (koagulieren). Das wässrige Medium enthält vorzugsweise keine üblichen Fällungsmittel, wie mehrwertige Metallionen, z.B. AI³⁺. Zum Ausfällen der Polymerpartikel wird die Polymerdispersion im Allgemeinen mit dem 2 bis 10-fachen Volumen an wässrigem Medium verdünnt.

Die erfindungsgemäßen Polymerdispersionen führen beim Trocknen bei Raumtemperatur oder erhöhterTemperatur zu einem zusammenhängenden Film, der über hohe mechanische Festigkeit sowie hohe Wasserfestigkeit verfügt. Durch nachträgliches Tempern der Filme bei Temperaturen von mehr als 60°C, vorzugsweise mehr als 120°C, lassen sich Härte und Festigkeit des Materials in der Regel deutlich erhöhen. Dieser Härteanstieg kann z.B. durch Messung der Pendelhärte nach König gemäß DIN 53157 gemessen werden.

Die erfindungsgemäßen Polymerdispersionen sind als Bindemittel insbesondere für Formkörper, textile Flächengebilde, Klebstoffe oder für Beschichtungszwecke geeignet. Sie sind insbesondere als thermisch härtbare Kaschierkleber geeignet. Bei der Zubereitung als Bindemittel für verschiedene Zwecke können die Polymerdispersionen noch weitere übliche Hilfsstoffe enthalten.

Soweit die Polymerpartikel Einheiten von Monomeren mit vernetzungsfähigen Seitengruppen enthalten, können die erfindungsgemäßen Zusammensetzungen einen Reaktionsbeschleuniger (Katalysator) enthalten, vorzugsweise jedoch liegen sie ohne einen derartigen Reaktionsbeschleuniger vor. Geeignete Reaktionsbeschleuniger sind z.B. Alkalimetallhypophosphite, -phosphite, -polyphosphate, -dihydrogenphosphate, Polyphosphorsäure, Hypophosphorsäure, Phosphorsäure, Alkylphosphinsäure oder Oligomere bzw. Polymere dieser Salze und Säuren.

Weiterhin sind als Katalysatoren geeignet starke Säuren, wie z.B. Schwefelsäure oder p-Toluolsulfonsäure. Auch polymere Sulfonsäuren, wie z.B. Poly(acrylamido-2-methylpropansulfonsäure), Poly(vinylsulfonsäure), Poly(p-styrolsulfonsäure), Poly(sulfopropylmethacrylat) und polymere Phosphonsäuren, wie z.B. Poly(vinylphosphonsäure) sowie davon abgeleitete Copolymere mit den oben beschriebenen Comonomeren sind geeignet.

Weiterhin als Katalysatoren geeignet sind Organotitanate und Organozirkonate wie z.B. Triethanoltitanat, Titanchelat ETAM und Tetrabutylzirkonat, die z.B. von der Fa. Hüls vertrieben werden.

Weiter können die erfindungsgemäßen Zusammensetzungen übliche Zusätze je nach Anwendungszweck enthalten. Beispielsweise können sie Bakterizide oder Fungizide enthalten. Darüber hinaus können sie Hydrophobierungsmittel zur Erhöhung der Wasserfestigkeit der behandelten Substrate enthalten. Geeignete Hydrophobierungsmittel sind übliche wässrige Paraffindispersionen oder Silicone. Weiter können die Zusammensetzungen Netzmittel, Verdickungsmittel, Plastifizierungsmittel, Retentionsmittel, Pigmente und Füllstoffe enthalten.

Schließlich können die erfindungsgemäßen Zusammensetzungen übliche Brandschutzmittel, wie z.B. Aluminiumsilikate, Aluminiumhydroxide, Borate und/oder Phosphate enthalten.

Häufig enthalten die Zusammensetzungen auch Kupplungsreagenzien, wie Alkoxysilane, beispielsweise 3-Aminopropyltriethoxysilan, lösliche oder emulgierbare Öle als Gleitmittel und Staubbindemittel sowie Benetzungshilfsmittel.

Ferner können die erfindungsgemäßen Zusammensetzungen in der Beschichtungs- und Imprägnierungstechnologie übliche Hilfsstoffe enthalten. Beispiele hierfür sind feinteilige inerte Füllstoffe, wie Aluminiumsilikate, Quarz, gefällte oder pyrogene Kieselsäure, Leicht- und Schwerspat, Talkum, Dolomit oder Calciumcarbonat; farbgebende Pigmente, wie Titanweiß, Zinkweiß, Eisenoxidschwarz etc., Schauminhibitoren, wie modifizierte Dimethylpolysiloxane, und Haftvermittler sowie Konservierungsmittel.

Die erfindungsgemäßen Zusammensetzungen können auch in Abmischung mit anderen Bindemitteln, wie beispielsweise Harnstoff-Formaldehyd-Harzen, Melamin-Formaldehyd-Harzen oder Phenol-Formaldehyd-Harzen, sowie mit Epoxidharzen eingesetzt werden.

Die Erfindung betrifft ferner ein Verfahren zum Herstellen von zwei- oder dreidimensionalen Gebilden, bei dem eine Polymerdispersion mit einem teilchen- oder faserförmigen Substrat in Kontakt gebracht wird und einem Härtungsschritt unterzogen wird.

Die Erfindung betrifft insbesondere ein Verfahren zum Herstellen von zwei- oder dreidimensionalen Gebilden, bei dem eine erfindungsgemäße Polymerdispersion, ein teilchen- oder faserförmiges Substrat und eine wässrige Phase miteinander in Kontakt gebracht werden, wobei die Polymerpartikel koaguliert werden, gegebenenfalls überschüssige wässrige Phase entfernt wird und das Gemisch von Substrat und koagulierten Polymerpartikeln einem Härtungsschritt unterzogen wird.

Als wässrige Phase kommt insbesondere Leitungswasser in Betracht. Das Inkontaktbringen von Dispersionen, Substrat und wässriger Phase kann z.B. erfolgen, indem eine erfindungsgemäße Polymerdispersion zu einer wässrigen Aufschlämmung oder Suspension des Substrats gegeben wird. Derartige Substrataufschlämmungen oder -suspensionen sind in verschiedenen industriellen Prozessen anzutreffen, z.B. Zellstoff-Faserbreie bei der Papierherstellung oder Aufschlämmungen von Holzfasern bei der Spanplattenherstellung.

Das Entfernen überschüssiger Wasserphase erfolgt z.B. durch Abpressen, z.B. über ein Langsieb, Membranpressen, u.s.w.

Alternativ kann zuerst das Substrat mit einer erfindungsgemäßen Polymerdispersion gemischt werden und das Gemisch mit wässriger Phase versetzt werden.

Der Härtungsschritt erfolgt vorzugsweise durch Erhitzen. Beim Erhitzen verdampft das in der Zusammensetzung enthaltene Wasser und es kommt zur Härtung der Zusammensetzung. Diese Prozesse können nacheinander oder gleichzeitig ablaufen. Unter Härtung wird in diesem Zusammenhang die chemische Veränderung der Zusammensetzung verstanden, z.B. die Vernetzung durch Knüpfung von kovalenten Bindungen zwischen den verschiedenen Bestandteilen der Zusammensetzungen, Bildung von ionischen Wechselwirkungen und Clustern, Bildung von Wasserstoffbrücken. Weiterhin können bei der Härtung auch physikalische Veränderungen im Bindemittel ablaufen, wie z. B. Phasenumwandlungen oder Phaseninversion.

Die Härtungstemperaturen liegen zwischen 75 und 250°C, bevorzugt zwischen 90 und 200°C, besonders bevorzugt zwischen 100 und 180°C. Die Dauer und die Temperatur der Erwärmung beeinflussen den Aushärtungsgrad. Ein Vorteil der erfindungsgemäßen Zusammensetzungen ist, dass ihre Härtung bei vergleichsweise niedrigen Temperaturen erfolgen kann.

Die Aushärtung kann auch in zwei oder mehr Stufen erfolgen. So kann z.B. in einem ersten Schritt die Härtungstemperatur und -zeit so gewählt werden, dass nur ein geringer Härtungsgrad erreicht wird und weitgehend vollständige Aushärtung in einem zweiten Schritt erfolgt. Dieser zweite Schritt kann räumlich und zeitlich getrennt vom ersten Schritt erfolgen. Dadurch wird beispielsweise die Verwendung der erfindungsgemäßen Zusammensetzungen zur Herstellung von mit Bindemittel imprägnierten Halbzeugen möglich, die an anderer Stelle verformt und ausgehärtet werden können.

Als teilchen- oder faserförmige Substrate kommen Fasern, Schnitzel oder Späne in Betracht. Dabei kann es sich um solche aus nachwachsenden Rohstoffen oder um synthetische oder natürliche Fasern, z.B. aus Kleiderabfällen handeln. Als nachwachsende Rohstoffe seien insbesondere Sisal, Jute, Flachs, Kokosfasern, Kenaf, Bananenfasern, Hanf und Kork genannt. Besonders bevorzugt sind Holzfasern oder Holzspäne.

Die Formkörper haben bevorzugt eine Dichte von 0,2-1,4 g/cm³ bei 23°C. Als Formkörper kommen insbesondere Platten und Formteile mit unregelmäßiger Kontur in Betracht. Ihre Dicke beträgt im Allgemeinen mindestens 1 mm, vorzugsweise mindestens 2 mm, ihre Oberfläche beträgt typischerweise 200 bis 200 000 cm². In Betracht kommen insbesondere Automobilinnenteile, z.B. Türinnenverkleidungen, Armaturenträger, Hutablagen.

Die Gewichtsmenge des verwendeten Bindemittels beträgt im Allgemeinen 0,5-50 Gew.-%, vorzugsweise 1-40 Gew.-% (Bindemittel fest), bezogen auf das Substrat (Fasern, Schnitzel oder Späne).

Die Mischung aus Fasern, Schnitzeln und Spänen und dem Bindemittel kann z.B. bei Temperaturen von 10-150°C vorgetrocknet werden und anschließend, z.B. bei Temperaturen von 50-250°C, vorzugsweise 100-240°C und besonders bevorzugt 120-225°C und Drücken von im allgemeinen 2-1000 bar, vorzugsweise 10-750 bar, besonders bevorzugt 20-500 bar zu den Formkörpern verpreßt werden.

Die Bindemittel eignen sich insbesondere zur Herstellung von Holzwerkstoffen wie Holzspanplatten und Holzfaserplatten (vgl. Ullmanns Encyclopädie der technischen Chemie, 4. Auflage 1976, Band 12, S. 709-727), die durch Verleimung von zerteiltem Holz, wie z.B. Holzspänen und Holzfasern, hergestellt werden können. Die Wasserfestigkeit von Holzwerkstoffen kann erhöht werden, indem man dem Bindemittel eine handelsübliche wässrige Paraffindispersion oder andere Hydrophobierungsmittel zusetzt, bzw. diese Hydrophobierungsmittel vorab oder nachträglich den Fasern, Schnitzeln oder Spänen zusetzt.

Die Herstellung von Spanplatten ist allgemein bekannt und wird beispielsweise in H.J. Deppe, K. Ernst Taschenbuch der Spanplattentechnik, 2. Auflage, Verlag Leinfelden 1982, beschrieben.

Es werden bevorzugt Späne eingesetzt, deren mittlere Spangröße zwischen 0,1 und 4 mm, insbesondere 0,2 und 2 mm liegt, und die weniger als 6 Gew.-% Wasser enthalten. Es können jedoch auch deutlich grobteiligere Späne und solche mit höherem Feuchtigkeitsgehalt eingesetzt werden. Das Bindemittel wird möglichst gleichmäßig auf die Holzspäne aufgetragen, wobei das GewichtsVerhättnis Bindemittel fest:Holzspäne vorzugsweise 0,02:1 bis 0,3:1 beträgt. Eine gleichmäßige Verteilung läßt sich beispielsweise erreichen, indem man das Bindemittel in feinverteilter Form auf die Späne aufsprüht.

Die beleimten Holzspäne werden anschließend zu einer Schicht mit möglichst gleichmäßiger Oberfläche ausgestreut, wobei sich die Dicke der Schicht nach der gewünschten Dicke der fertigen Spanplatte richtet. Die Streuschicht wird bei einer Temperatur von z.B. 100-250°C, bevorzugt von 120-225°C durch Anwendung von Drükken von üblicherweise 10-750 bar zu einer Platte verpreßt. Die benötigten Preßzeiten können in einem weiten Bereich variieren und liegen im Allgemeinen zwischen 15 Sekunden bis 30 Minuten.

Auch andere Naturfaserstoffe, wie Sisal, Jute, Hanf, Flachs, Kokosfasern, Bananenfasern und andere Naturfasern können mit den Bindemitteln zu Platten und Formteilen verarbeitet werden. Die Naturfaserstoffe können auch in Mischungen mit Kunststoffasern, z.B. Polypropylen, Polyethylen, Polyester, Polyamid oder Polyacrylnitril verwendet werden. Diese Kunststoffasern können dabei auch als Cobindemittel neben dem erfindungsgemäßen Bindemittel fungieren. Der Anteil der Kunststoffasern beträgt dabei bevorzugt weniger als 50 Gew.-%, insbesondere weniger als 30 Gew.-% und ganz besonders bevorzugt weniger als 10 Gew.-%, bezogen auf alle Späne, Schnitzel oder Fasern. Die Verarbeitung der Fasern kann nach dem bei den Holzfaserplatten praktizierten Verfahren erfolgen. Es können aber auch vorgeformte Naturfasermatten mit den erfindungsgemäßen Bindemitteln imprägniert werden, gegebenenfalls unter Zusatz eines Benetzungshilfsmittels. Die imprägnierten Matten werden dann im bindemittelfeuchten oder vorgetrockneten Zustand z.B. bei Temperaturen zwischen 100-250°C und Drücken zwischen 10-100 bar zu Platten oder Formteilen verpreßt.

Bevorzugt haben die mit den erfindungsgemäßen Bindemitteln imprägnierten Substrate beim verpressen einen Restfeuchtegehalt von 3-20 Gew.-%, bezogen auf das zu bindende Substrat.

Die erfindungsgemäß erhaltenen Formkörper haben eine geringe Wasseraufnahme, eine niedrige Dickenquellung nach Wasserlagerung, eine gute Festigkeit und sind formaldehydfrei.

Die erfindungsgemäßen Polymerdispersionen können weiterhin zur Herstellung von Schleifpapier und Schleifkörpern nach den üblichen mit Phenolharz als Bindemittel durchgeführten Herstellungsverfahren verwendet werden. Bei der Herstellung von Schleifpapieren wird auf ein geeignetes Trägerpapier zunächst eine Schicht Bindemittel als Grundbinder aufgetragen (zweckmäßigerweise 10 g/m²). In den feuchten Grundbinder wird die gewünschte Menge an Schleifkom eingestreut. Nach einer Zwischentrocknung wird eine Deckbinderschicht aufgetragen (z.B. 5 g/m²). Das auf diese Weise beschichtete Papier wird anschließend zur Aushärtung noch (z.B. 5 Minuten lang bei 170°C) getempert.

Die erfindungsgemäßen Polymerdispersionen sind weiterhin geeignet als Kernsandbindemittel zur Herstellung von Gußformen und Kernen für den Metallguß nach den üblichen Verfahren. Sie sind ferner geeignet als Bindemittel für Kokillendämmplatten und Mineralfaserdämmstoffe.

Außerdem kann man die erfindungsgemäßen Zusammensetzungen für Beschichtungszwecke, z.B. als Bindemittel für Beschichtungs- und Imprägniermassen für Platten aus organischen und/oder anorganischen Fasern, nicht faserigen mineralischen Füllstoffen sowie Stärke und/oder wässrigen Polymerisatdispersionen verwenden. Die Beschichtungs- und Imprägniermassen verleihen den Platten einen hohen Biegemodul. Die Herstellung derartiger Platten ist bekannt.

Die Komponenten der erfindungsgemäßen Zusammensetzung sind in der Beschichtungsmasse im Allgemeinen in einer Menge von 1-65 Gew.-% enthalten. Der Anteil der inerten Füllstoffe liegt im Allgemeinen bei 0-85 Gew.-%, der Wasseranteil beträgt mindestens 10 Gew.-%.

Die Anwendung der Zusammensetzungen erfolgt in üblicher Weise durch Auftragen auf ein Substrat, beispielsweise durch Sprühen, Rollen, Gießen oder Imprägnieren. Die aufgetragenen Mengen, bezogen auf den Trokkengehalt der Zusammensetzung, betragen im Allgemeinen 2-100 g/m².

Die einzusetzenden Mengen an Zusatzstoffen sind dem Fachmann bekannt und richten sich im Einzelfall nach den gewünschten Eigenschaften und dem Anwendungszweck.

Die erfindungsgemäßen Zusammensetzungen sind auch als Bindemittel für textile Flächengebilde einsetzbar. Zur Herstellung der textilen Flächengebilde wird das Bindemittel auf ein Gefüge von Fasern aufgebracht, gegebenenfalls ein Überschuß entfernt und das Bindemittel gehärtet.

Als Fasern sind z.B. Vliese aus Cellulose, Celluloseacetat, Ester und Ether der Cellulose, Baumwolle, Hanf, tierische Fasern, wie Wolle oder Haare und insbesondere Vliese von synthetischen oder anorganischen Fasern, z.B. Aramid-, Kohlenstoff-, Polyacrylnitril-, Polyester-, Mineral-, PVC- oder Glasfasern geeignet.

Im Falle der Verwendung als Bindemittel für Faservliese können die erfindungsgemäßen Zusammensetzungen z.B. folgende Zusatzstoffe enthalten: Silikate, Silikone, borhaltige Verbindungen, Gleitmittel, Benetzungsmittel.

Das Bindemittel wird vorzugsweise im Gewichtsverhältnis Faser/Bindemittel (fest) von 10:1 bis 1:1, besonders bevorzugt von 6:1 bis 3:1 auf das Rohfaservlies z.B. durch Beschichten, Imprägnieren, Tränken aufgebracht.

Nach dem Aufbringen des Bindemittels auf das Rohfaservlies erfolgt im Allgemeinen eine Trocknung vorzugsweise bei 100-400°C, insbesondere 130-280°C, ganz besonders bevorzugt 130-230°C über einen Zeitraum von vorzugsweise 10 Sekunden bis 10 Minuten, insbesondere von 10 Sekunden bis 3 Minuten.

Das erhaltene, gebundene Faservlies weist eine hohe Festigkeit im trockenen und nassen Zustand auf. Die erfindungsgemäßen Bindemittel erlauben insbesondere kurze Trocknungszeiten und auch niedrige Trocknungstemperaturen.

Die gebundenen Faservliese, insbesondere Glasfaservliese eignen sich zur Verwendung als bzw. in Dachbahnen, als Trägermaterialien für Tapeten oder als Inliner bzw. Trägermaterial für Fußbodenbeläge z.B. aus PVC.

Bei der Verwendung als Dachbahnen werden die gebundenen Faservliese im Allgemeinen mit Bitumen beschichtet.

Mit den erfindungsgemäßen Zusammensetzungen lassen sich durch Imprägnierung von Papier und anschließende schonende Trocknung nach den bekannten Verfahren sogenannte Laminate, z.B. für dekorative Anwendungen, herstellen. Diese werden in einem zweiten Schritt auf das zu beschichtende Substrat unter Einwirkung von Hitze und Druck auflaminiert, wobei die Bedingungen so gewählt werden, dass es zur Aushärtung des Bindemittels kommt.

Die folgenden Beispiele sollen die Erfindung näher veranschaulichen. Der Feststoffgehalt wurde aus dem Gewichtsverlust einer Probe von 1 g bestimmt, die 2 h bei 120°C in einem Umluft-Trockenschrank getrocknet wurde. Die Viskosität der Proben wurde mit Hilfe eines Rotationsviskosimeters (Rheomat) der Fa. Paar Physica bei einer Schergeschwindigkeit von 250 s⁻¹ gemäß DIN 53109 bei 23°C bestimmt. Der K-Wert der Polyelektrolyte wurde in 1%iger wässriger Lösung analog zu DIN 53726 gemessen.

### Beispiel 1:

In einem 4 I-Glasgefäß mit Ankerrührer (120 Upm) wurden 628 g Wasser, 682 g einer 44 Gew.-%igen wässrigen Lösung eines Natrium(acrylamidopropansulfonat)-Homopolymerisats (pH-Wert 4,4; K-Wert 8,2), 250 g einer 40 Gew.-%igen wässrigen Lösung von Lipamin OK (Fa. BASF, ethoxyliertes Oleylmonoamin, mittlerer Ethoxylierungsgrad=12; mit Dimethylsulfat permanent quaterniert) vorgelegt. Bei einer Innentemperatur von 85°C wurden 5 Gew.-% der Gesamtmenge eines Zulauf 1 und 10 Gew.-% der Gesamtmenge eines Zulauf 2 zugegeben. Die Reaktionsmischung wird 10 min bei 85°C anpolymerisiert. Anschließend wurden bei 85°C innerhalb von 4 h die Restmenge von Zulauf 1 und innerhalb von 4,5 h die Restmenge von Zulauf 2 räumlich getrennt kontinuierlich zugeführt. Das so hergestellte Polymerisat enthält 39,2% nichtflüchtige Anteile und hat einen pH-Wert von 4,6. Die Viskosität der erhaltenen Zusammensetzung beträgt 589 mPas.

| | |
|---|---|
| Zulauf 1 | 200 g Styrol |
| | 150 g n-Butylmethacrylat |
| | 150 g Ethylacrylat |
| Zulauf 2 | 100 g vollentsalztes Wasser |
| | 5 g Natriumperoxodisulfat |

### Beispiel 2:

In einem 4 l-Glasgefäß mit Ankerrührer (120 Upm) wurden 359 g Wasser, 300 g einer 32 Gew.-%igen wässrigen Lösung eines Dimethylaminoethylacrylat-Homopolymerisats (permanent quaterniert mit Dimethylsulfat; pH-Wert 4,0; K-Wert 10,8), 167 g einer 30 Gew.-%igen wässrigen Lösung von Disponil FES 77 (Fa. Henkel, Fettethersulfat, mittlerer Ethoxylierungsgrad=30) vorgelegt. Bei einer Innentemperatur von 85°C wurden 5 Gew.-% der Gesamtmenge eines Zulauf 1 und 10 Gew.-% der Gesamtmenge von Zuläufen 2 und 3 zugegeben. Die Reaktionsmischung wird 10 min bei 85°C anpolymerisiert. Anschließend wurden bei 85°C innerhalb von 3 h die Restmenge von Zulauf 1, 2 und 3 räumlich getrennt kontinuierlich zugeführt. Das so hergestellte Polymerisat enthält 37,5% nichtflüchtige Anteile und hat einen pH-Wert von 3,7. Die Viskosität der erhaltenen Zusammensetzung beträgt 854 mPas.

| | |
|---|---|
| Zulauf 1 | 350 g n-Butylacrylat |
| | 125 g Methylmethacrylat |
| | 150 g Acrylnitril |
| | 400 g vollentsalztes Wasser |
| | 33 g Disponil FES 77 |
| Zulauf 2 | 10 g tert-Butylhydroperoxid (10%ige wässrige Lösung) |
| Zulauf 3 | 5 g Natriumbisulfit (20%ige wässrige Lösung) |
| | 40 g vollentsalztes Wasser |

### Beispiel 3:

In einem 4 l-Glasgefäß mit Ankerrührer (120 Upm) wurden 1200 g Sokalan CP 12 S (50 Gew.-%ige wässrige Lösung eines Acrylsäure-Maleinsäure-Copolymerisats, mittlere Zusammensetzung ca. 50:50 Gew.-% AS:MS, pH-Wert ca. 1,8, mittlere molare Masse Mw=3000 g/mol) und 375 g einer 40 Gew.-%igen wässrigen Lösung von Uniperol AC (Fa. BASF, ethoxyliertes Oleylmonoamin, mittlerer Ethoxylierungsgrad=12) vorgelegt. Bei einer Innentemperatur von 85°C wurden 5 Gew.-% der Gesamtmenge eines Zulauf 1 und 10 Gew.-% der Gesamtmenge eines Zulauf 2 zugegeben. Die Reaktionsmischung wird 10 min bei 85°C anpolymerisiert. Anschließend wurden bei 85°C innerhalb von 3 h die Restmenge von Zulauf 1 und innerhalb von 3,5 h die Restmengevon Zulauf 2 räumlich getrennt kontinuierlich zugeführt. Das so hergestellte Polymerisat enthält 63,7% nichtflüchtige Anteile und hat einen pH-Wert von 1,5. Die Viskosität der erhaltenen Zusammensetzung beträgt 850 mPas.

| | |
|---|---|
| Zulauf 1 | 500 g Styrol |
| | 450 g Methylmethacrylat |
| | 150 g 2-Hydroxyethylacrylat |
| Zulauf 2 | 80 g vollentsalztes Wasser |
| | 10 g Natriumperoxodisulfat |

### Beispiel 4:

In einem 4 I-Glasgefäß mit Ankerrührer (120 Upm) wurden 217 g einer 46 Gew.-%igen wässrigen Lösung eines Natriumstyrolsulfonat-Homopolymerisats (pH-Wert 4,7 ; K-Wert 12,0),100 g Lipamin OK und 479 g vollentsalztes Wasser vorgelegt. Bei einer Innentemperatur von 85°C wurden 5 Gew.-% der Gesamtmenge eines Zulauf 1 und 10 Gew.-% der Gesamtmenge eines Zulauf 2 zugegeben. Die Reaktionsmischung wird 10 min bei 85°C anpolymerisiert. Anschließend wurden bei 85°C innerhalb von 4 h die Restmenge von Zulauf 1 und innerhalb von 4,5 h die Restmenge von Zulauf 2 räumlich getrennt kontinuierlich zugeführt. Das so hergestellte Polymerisat enthält 28,3% nichtflüchtige Anteile und hat einen pH-Wert von 3,6. Die Viskosität der erhaltenen Zusammensetzung beträgt 272 mPas.

| | |
|---|---|
| Zulauf 1 | 60 g Styrol |
| | 60 g Methylmethacrylat |
| | 80 g Ethylhexylacrylat |
| Zulauf 2 | 60 g vollentsalztes Wasser |
| | 2 g Natriumperoxodisulfat |

### Beispiel 5:

In einem 4 I-Glasgefäß mit Ankerrührer (120 Upm) wurden 270 g von Luviquat FC 905 (Fa. BASF, 40 Gew.-%ige wässrige Lösung eines quaternierten Vinylimidazol-Vinylpyrrolidon-Copolymerisats, pH-Wert 6,0 ; K-Wert 14,8), 87 g Emulphor NPS 25 (Fa. BASF, 15 Gew.-%ige wässrige Lösung eines Nonylphenolethoxylats, mittlerer Ethoxylierungsgrad=25) und 200 g vollentsalztes Wasser vorgelegt. Bei einer Innentemperatur von 85°C wurden 5 Gew.-% der Gesamtmenge eines Zulauf 1 und 10 Gew.-% der Gesamtmenge eines zulauf 2 zugegeben. Die Reaktionsmischung wird 10 min bei 85°C anpolymerisiert. Anschließend wurden bei 85°C innerhalb von 4 h die Restmenge von Zulauf 1 und innerhalb von 4,5 h die Restmenge von Zulauf 2 räumlich getrennt kontinuierlich zugeführt. Das so hergestellte Polymerisat enthält 29,7% nichtflüchtige Anteile und hat einen pH-Wert von 3,2. Die Viskosität der erhaltenen Zusammensetzung beträgt 32 mPas.

| | |
|---|---|
| Zulauf 1 | 108 g Methylmethacrylat |
| | 72 g 2-Ethylhexylacrylat |
| | 172 g vollentsalztes Wasser |
| | 18 g Lutensol AT 18 (Fa. BASF, 20 Gew.-%ige wässrige Lösung eines Fettalkoholethoxylats, mittlerer |
| | Ethoxylierungsgrad=18) |
| Zulauf 2 | 60 g vollentsalztes Wasser |
| | 1,8 g Natriumperoxodisulfat |

### Beispiel 6:

In einem 4 l-Glasgefäß mit Ankerrührer (120 Upm) wurden 429 g Sokalan PA 80 S (35 Gew.%igen wässrigen Lösung eines Acrylsäure-Homopolymerisats, pH-Wert ca. 1,8; mittlere molare Masse Mw=100 kg/mol), 25 g von Noramox C 11 (Fa. Elf-Atochem, ethoxyliertes Cocosfettamin, mittlerer Ethoxylierungsgrad=11) und 208 g vollentsalztes Wasser vorgelegt. Bei einer Innentemperatur von 85°C wurden 5 Gew.-% der Gesamtmenge eines Zulauf 1 und 10 Gew.-% der Gesamtmenge eines Zulauf 2 zugegeben. Die Reaktionsmischung wird 10 min bei 85°C anpolymerisiert. Anschließend wurden bei 85°C innerhalb von 3 h die Restmenge von Zulauf 1 und innerhalb von 3,5 h die Restmenge von Zulauf 2 räumlich getrennt kontinuierlich zugeführt. Das so hergestellte Polymerisat enthält 36,9% nichtflüchtige Anteile und hat einen pH-Wert von 2,1. Die Viskosität der erhaltenen Zusammensetzung beträgt 398 mPas.

| | |
|---|---|
| Zulauf 1 | 125 g Methylmethacrylat |
| | 125 g n-Butylacrylat |
| | 2,5 g Methacrylsäure |
| Zulauf 2 | 100 g vollentsalztes Wasser |
| | 2,5 g Natriumperoxodisulfat |

### Beispiel 7:

In einem 4 I-Glasgefäß mit Ankerrührer (120 Upm) wurden 270 g von Sokalan HP 80 (Fa. BASF, 35 Gew.-%ige wässrige Lösung eines Acrylsäure-Methylpolyglycolmethacrylat-Copolymerisats, pH-Wert 7,2; K-Wert 26), 80 g Lipamin OK und 321 g vollentsalztes Wasser vorgelegt. Bei einer Innentemperatur von 85°C wurden 5 Gew.-% der Gesamtmenge eines Zulauf 1 und 10 Gew.-% der Gesamtmenge eines Zulauf 2 zugegeben. Die Reaktionsmischung wird 10 min bei 85°C anpolymerisiert. Anschließend wurden bei 85°C innerhalb von 4 h die Restmenge von Zulauf 1 und innerhalb von 4,5 h die Restmenge von Zulauf 2 räumlich getrennt kontinuierlich zugeführt. Das so hergestellte Polymerisat enthält 29,0% nichtflüchtige Anteile und hat einen pH-Wert von 6,4. Die Viskosität der erhaltenen Zusammensetzung beträgt 28 mPas.

| | |
|---|---|
| Zulauf 1 | 32 g Styrol |
| | 128 g n-Butylacrylat |
| | 72 g 2-Hydroxyethylacrylat |
| Zulauf 2 | 80 g vollentsalztes Wasser |
| | 1,6 g Wako V 50 (Fa. Wako, Azo-Radikalstarter) |

### Beispiel 8:

In einem 4-I Glasgefäß mit Ankerrührer (120 Upm) wurden 240 g Sokalan CP 12 S, 87 g Cetyltrimethylammoniumbromid und 560 g vollentsalztes Wasser vorgelegt. Bei einer Innentemperatur von 85°C wurden 5 Gew.-% der Gesamtmenge eines Zulauf 1 und 10 Gew.-% der Gesamtmenge eines Zulauf 2 zugegeben. Die Reaktionsmischung wird 10 min bei 85°C anpolymerisiert. Anschließend wurden bei 85°C innerhalb von 3 h die Restmenge von Zulauf 1 und innerhalb von 3,5 h die Restmenge von Zulauf 2 räumlich getrennt kontinuierlich zugeführt. Das so hergestellte Polymerisat enthält 28,6% nichtflüchtige Anteile und hat einen pH-Wert von 1,5. Die Viskosität der erhaltenen Zusammensetzung beträgt 7 mPas.

| | |
|---|---|
| Zulauf 1 | 100 g Styrol |
| | 90 g Methylmethacrylat |
| | 10 g 2-Hydroxyethylacrylat |
| Zulauf 2 | 60 g vollentsalztes Wasser |
| | 2 g Natriumperoxodisulfat |

### Vergleichsbeispiel V-1:

In einem 4 I-Glasgefäß mit Ankerrührer (120 Upm) wurden 270 g von Sokalan CP 12 S, 250 g Disponil FES 77 und 875 g vollentsalztes Wasser vorgelegt. Bei einer Innentemperatur von 85°C wurden 5 Gew.-% der Gesamtmenge eines Zulauf 1 und 10 Gew.-% der Gesamtmenge eines Zulauf 2 zugegeben. Die Reaktionsmischung wird 10 min bei 85°C anpolymerisiert. Anschließend wurden bei 85°C innerhalb von 3 h die Restmenge von Zulauf 1 und innerhalb von 3,5 h die Restmenge von Zulauf 2 räumlich getrennt kontinuierlich zugeführt. Das so hergestellte Polymerisat enthält 35,2% nichtflüchtige Anteile und hat einen pH-Wert von 1,9. Die Viskosität der erhaltenen Zusammensetzung beträgt 18 mPas.

| | |
|---|---|
| Zulauf 1 | 250 g Styrol |
| | 225 g Methylmethacrylat |
| | 25 g 2-Hydroxyethylacrylat |
| Zulauf 2 | 200 g vollentsalztes Wasser |
| | 5 g Natriumperoxodisulfat |

### Vergleichsbeispiel V-2:

In einem 4 I-Glasgefäß mit Ankerrührer (120 Upm) wurden 240 g einer 32 Gew.-%igen wässrigen Lösung eines Dimethylaminoethylacrylat-Homopolymerisats (permanent quaterniert mit Dimethylsulfat; pH-Wert 4,0; K-Wert 10,8), 100 g Lipamin OK und 1200 g vollentsalztes Wasser vorgelegt. Bei einer Innentemperatur von 85°C wurden 5 Gew.-% der Gesamtmenge eines Zulauf 1 und 10 Gew.-% der Gesamtmenge eines Zulauf 2 zugegeben. Die Reaktionsmischung wird 10 min bei 85°C anpolymerisiert. Anschließend wurden bei 85°C innerhalb von 4 h die Restmenge von Zulauf 1 und innerhalb von 4,5 h die Restmenge von Zulauf 2 räumlich getrennt kontinuierlich zugeführt. Das so hergestellte Polymerisat enthält 23,5% nichtflüchtige Anteile und hat einen pH-Wert von 4,2. Die Viskosität der erhaltenen Zusammensetzung beträgt 80 mPas.

| | |
|---|---|
| Zulauf 1 | 280 g n-Butylacrylat |
| | 100 g Methylmethacrylat |
| | 20 g Acrylnitril |
| | 20 g Lipamin OK |
| | 131 g vollentsalztes Wasser |
| Zulauf 2 | 100 g vollentsalztes Wasser |
| | 4 g Natriumperoxodisulfat |

### Vergleichsbeispiel V-3:

In einem 4 I-Glasgefäß mit Ankerrührer (120 Upm) wurden 183 g Disponil FES 77 und 900 g vollentsalztes Wasser vorgelegt. Bei einer Innentemperatur von 85°C wurden 5 Gew.-% der Gesamtmenge eines Zulauf 1 und 10 Gew.-% der Gesamtmenge eines Zulauf 2 zugegeben. Die Reaktionsmischung wird 10 min bei 85°C anpolymerisiert. Anschließend wurden bei 85°C innerhalb von 4 h die Restmenge von Zulauf 1 und innerhalb von 4,5 h die Restmenge von Zulauf 2 räumlich getrennt kontinuierlich zugeführt. Nach dem Abkühlen wurden 330 g einer32 Gew.-%igen wässrigen Lösung eines Dimethylaminoethylacrylat-Homopolymerisats (permanent quaterniert mit Dimethylsulfat; pH-Wert 4,0; K-Wert 10,8) zugesetzt. Das so hergestellte Polymerisat enthält 39,5% nichtflüchtige Anteile und hat einen pH-Wert von 3,9. Die Polymerdispersion war nicht stabil, es wurde allmähliche Sedimentation beobachtet.

| | |
|---|---|
| Zulauf 1 | 385 g n-Butylacrylat |
| | 138 g Methylmethacrylat |
| | 28 g Acrylnitril |
| | 37 g Disponil FES 77 |
| | 167 g vollentsalztes Wasser |
| Zulauf 2 | 100 g vollentsalztes Wasser |
| | 5,5 g Natriumperoxodisulfat |

### Vergleichsbeispiel V-4:

In einem 4I-Glasgefäß mit Ankerrührer (120 Upm) wurden 83 g Lipamin OK und 602 g vollentsalztes Wasser vorgelegt. Bei einer Innentemperatur von 85°C wurden 5 Gew.-% der Gesamtmenge eines Zulauf 1 und 10 Gew.-% der Gesamtmenge eines Zulauf 2 zugegeben. Die Reaktionsmischung wird 10 min bei 85°C anpolymerisiert. Anschließend wurden bei 85°C innerhalb von 3 h die Restmenge von Zulauf 1 und innerhalb von 3,5 h die Restmenge von Zulauf 2 räumlich getrennt kontinuierlich zugeführt. Nach dem Abkühlen wurden 264 g von Sokalan HP 80 zugesetzt. Das so hergestellte Polymerisat enthält 26,0% nichtflüchtige Anteile und hat einen pH-Wert von 7,4. Die Viskosität der erhaltenen Zusammensetzung beträgt 15 mPas.

| | |
|---|---|
| Zulauf 1 | 110 g Styrol |
| | 110 g n-Butylacrylat |
| | 11 g 2-Hydroxyethylacrylat |
| Zulauf 2 | 60 g vollentsalztes Wasser |
| | 2,2 g Natriumperoxodisulfat |

### Vergleichsbeispiel V-5:

In einem 4 I-Glasgefäß mit Ankerrührer (120 Upm) wurden 300 g von Luviquat FC 905 (Fa. BASF, 40 Gew.-%igen wässrigen Lösung eines quaternierten Vinylimidazol-Vinylpyrrolidon-Copolymerisats, pH-Wert 6,0; K-Wert 14,8), 200 g Steinapol NLS (Fa. BASF, 15 Gew.-%ige wässrige Lösung von Natriumlaurylsulfat) und 303 g vollentsalztes Wasser vorgelegt. Dabei trat eine deutliche Trübung auf, die auch bei Temperaturerhöhung nicht wieder verschwand. Bei einer Innentemperatur von 85°C wurden 5 Gew.-% der Gesamtmenge eines Zulauf 1 und 10 Gew.-% der Gesamtmenge eines Zulauf 2 zugegeben. Die Reaktionsmischung wird 10 min bei 85°C anpolymerisiert. Anschließend wurden bei 85°C innerhalb von 4 h die Restmenge von Zulauf 1 und innerhalb von 4,5 h die Restmenge von Zulauf 2 räumlich getrennt kontinuierlich zugeführt. Es wurde ein Latex mit einem hohen Koagulat-Anteil erhalten, der nicht filtrierbar oder weiterverarbeitbar war.

| | |
|---|---|
| Zulauf 1 | 120 g Methylmethacrylat |
| | 80 g 2-Ethylhexylacrylat |
| | 20 g Lutensol AT 18 (Fa. BASF, 20 Gew.-%ige wässrige |
| | Lösung eines Fettalkoholethoxylats, mittlerer |
| | Ethoxylierungsgrad=18) |
| Zulauf 2 | 100 g vollentsalztes Wasser |
| | 2,0 g Natriumperoxodisulfat |

In Tabelle 1 ist die Stabilität der nach den obigen Beispielen erhaltenen Dispersionen aufgeführt. Die Prüfung auf Verdünnbarkeit wurde durch tropfenweise Zugabe der jeweiligen Probe zu etwa 50 g vollentsalztem Wasser bei 23°C unter Rühren durchgeführt. Trat dabei ein Niederschlag oder eine Stippenbildung auf, so gilt die Probe als instabil gegenüber Verdünnung mit Wasser. Die Scherstabilität wurde durch Scherung der unverdünnten Proben mit Hilfe eines Dispermats für 10 min bei 10000 U/min geprüft. Anschließend wurde die Probe auf einem Glasträger verstrichen und auf Koagulat bzw. Stippen (Feinkoagulat) untersucht. Bei einer deutlichen Erhöhung an Koagulat bzw. Stippen im Vergleich zur ungescherten Probe gilt die Probe als nicht scherstabil. Die Prüfung auf Elektrolytstabilität erfolgt durch tropfenweise Zugabe der jeweiligen Probe zu etwa 50 g wäßriger CaCl₂-Lösung definierter Konzentration unter Rühren bei 23°C. Kommt es dabei zur Koagulation, ist die Elektrolytstabilität der Probe überschritten. In Tabelle 1 ist diejenige CaCl₂-Konzentration angegeben, bei der die jeweilige Probe noch stabil ist.

Die erhaltenen Ergebnisse in Tabelle 1 machen deutlich, dass durch die Kombination eines Polyelektrolyten mit einem entgegengesetzt geladenen Tensid als Schutzkolloid-System bei der Emulsionspolymerisation Latizes erhalten werden, die eine hohe Elektrolyt- und vor allem Scherstabilität aufweisen, sich jedoch durch Verdünnen mit Wasser ausflocken lassen. Die Kombination gleich geladener Polyelektrolyte und Tenside hingegen führt zu Polymer-Dispersionen, die bei Verdünnung mit Wasser stabil sind. Die nachträgliche Zugabe eines Polyelektrolyten zu einer PolymerDispersion, die mit einem zum Polyelektrolyten entgegengesetzt geladenem Tensid stabilisiert ist, führt zu einem anderen Stabilitätsverhalten als die gleichzeitige Anwesenheit beider Komponenten während der Emulsionspolymerisation. In der Regel flockt der Latex aus. Ein Vergleich von Beispiel 5 und Vergleichsbeispiel V-5 macht deutlich, dass die Verwendung von ethoxylierten Tensiden die Stabilität der erfindungsgemäßen Zusammensetzungen in der Regel deutlich erhöht.

**Tabelle 1:**

| Stabilität der Patentbeispiele bei Verdünnung, Scherung und Elektrolytzusatz | | | | | | | |
|---|---|---|---|---|---|---|---|
| Probe | Polarität von ... | | FG | Koag. | Stabilität bei ... | | |
| | Polyelektrolyt | Tensid | [%] | [%] | Verdünnung | Scherung | Elektrolytzusatz |
| Beispiel 1 | neg. | pos. | 39,2 | <0,01 | instabil | stabil | bis 10% |
| Beispiel 2 | pos. | neg. | 37,5 | 0,02 | instabil | stabil | bis 5% |
| Beispiel 3 | neg. | pos. | 63,7 | 0,11 | instabil | stabil | bis 1% |
| Beispiel 4 | neg. | pos. | 28,3 | 0,02 | instabil | stabil | bis 5% |
| Beispiel 5 | pos. | neg. | 29,7 | 0,08 | instabil | stabil | bis 25% |
| Beispiel 6 | neg. | pos. | 36,9 | 0,07 | instabil | stabil | bis 5% |
| Beispiel 7 | neg. | pos. | 29,0 | <0,01 | instabil | stabil | bis 25% |
| Beispiel 8 | neg. | pos. | 28,6 | 2,00 | instabil | stabil | bis 5% |
| Vergleich V-1 | neg. | neg. | 35,2 | 0,02 | stabil | instabil | bis 10% |
| Vergleich V-2 | pos. | pos. | 23,5 | <0,01 | stabil | instabil | bis 1% |
| Vergleich V-3 | pos.* | neg. | Latex instabil; Polymer sedimentiert | | | | |
| Vergleich V-4 | neg.* | pos. | 26,0 | 1,53 | bedingt | instabil | bis 5% |
| Vergleich V-5 | pos. | neg. | Latex instabil; hoher Koagulat-Anteil | | | | |

| | | | | | | | |
|---|---|---|---|---|---|---|---|
| * nachträglich zudosiert | | | | | | | |

Ein weiteres Charakteristikum der erfindungsgemäßen Zusammensetzung ist, dass sich Härte und Festigkeit des nach Trocknung erhaltenen Filmes durch nachträgliches Tempern bei Temperaturen oberhalb von 80°C, bevorzugt oberhalb von 120°C in der Regel deutlich erhöhen lassen. Dieser Härteanstieg kann z.B durch Messung der Pendelhärte nach König gemäß DIN 53157 gemessen werden. Zur Demonstration dieses Effektes wurden aus den Proben der Patentbeispiele 1, 4 und 8 Filme von etwa 100 mm Dicke auf Glasträger durch mehrtägiges Trocknen bei 23°C hergestellt. Die Pendelhärte dieser Filme wurde ungetempert sowie nach Temperung für 10 min bei 100°C bzw. 160°C bestimmt. Dabei wurde ein Pendelhärtemeßgerät der Fa. Byk Mallinckrodt GmbH verwendet. Die erhaltenen Ergebnisse, aufgeführt in Tabelle 2, machen deutlich, dass bereits ein zehnminütiges Tempern bei 100°C und insbesondere bei 160°C zu einem signifikanten Anstieg der Pendelhärte, also der Filmhärte führt.

**Tabelle 2:**

| Pendelhärte (in Pendelsekunden) der Filme vor und nach der Temperung | | | |
|---|---|---|---|
| | ungetempert | 10 min bei 100°C | 10 min bei 160°C |
| Beispiel 1 | 52 | 128 | 188 |
| Beispiel 4 | 27 | 91 | 126 |
| Beispiel 8 | 105 | 234 | 214 |

## Patentansprüche

1. Polymerdispersion, enthaltend
i) in einem wässrigen Medium dispergierte Polymerpartikel aus Einheiten ethylenisch ungesättigter Monomere,
ii) einen wasserlöslichen polymeren Polyelektrolyten, der entlang eines polymeren Gerüstes eine Vielzahl ionischer Gruppen einheitlichen Ladungscharakters oder hierzu ionisierbarer Gruppen trägt, und
iii)ein ionisches Tensid, das eine ionische Gruppe mit zu dem polymeren Polyelektrolyten entgegengesetztem Ladungscharakter oder eine hierzu ionisierbare Gruppe trägt, in einer Menge von 2,5 bis 15 Gew.-%, bezogen auf das Gesamtgewicht der Polymerdispersion.

2. Polymerdispersion nach Anspruch 1, **dadurch gekennzeichnet, dass** der Polyelektrolyt und das ionische Tensid in einem Gewichtsverhältnis auf Feststoffbasis von 20:1 bis 1:1 vorliegen.

3. Polymerdispersion nach Anspruch 1 oder 2, **dadurch gekennzeichnet, dass** sie zusätzlich ein nicht-ionisches Tensid enthält.

4. Polymerdispersion nach Anspruch 1, 2, oder 3, **dadurch gekennzeichnet, dass** der Polyelektrolyt aus Einheiten ethylenisch ungesättigter Monomere aufgebaut ist und zu 20-100 Gew.-%, bezogen auf die gesamten Monomereinheiten, aus Einheiten ethylenisch ungesättigter C₃-C₈-Monocarbonsäuren; C₄- bis C₈-Dicarbonsäuren oder deren Halbestern; Sulfonsäuren; Schwefelsäurehalbester oder Phosphonsäuren und/oder Salzen davon besteht und das ionische Tensid ein quaternäres Ammoniumsalz ist, das mindestens eine Kohlenwasserstoffkette von wenigstens 6 Kohlenstoffatomen umfasst.

5. Polymerdispersion nach Anspruch 1, 2 oder 3, **dadurch gekennzeichnet, dass** der Polyelektrolyt aus Einheiten ethylenisch ungesättigter Monomere aufgebaut ist und zu 20-100 Gew.-%, bezogen auf die gesamten Monomereinheiten, aus Einheiten ethylenisch ungesättigter Sulfonsäuren, Schwefelsäurehalbester oder Phosphonsäuren und/oder Salzen davon besteht und das ionische Tensid ein Amin, das mindestens eine Kohlenwasserstoffkette von wenigstens 6 Kohlenstoffatomen umfasst, oder eine protonierte Form davon ist.

6. Polymerdispersion nach Anspruch 1, 2, oder 3, **dadurch gekennzeichnet, dass** der Polyelektrolyt aus Einheiten ethylenisch ungesättigter Monomere aufgebaut ist und zu 20-100 Gew.-%, bezogen auf die gesamten Monomereinheiten, aus Einheiten monoethylenisch ungesättigter Monomeren besteht, die eine quaternäre Ammoniumgruppe oder eine protonierbare Aminogruppe tragen.

7. Polymerdispersion nach einem der vorhergehenden Ansprüche, **dadurch gekennzeichnet, dass** der Polyelektrolyt einen Polymerisationsgrad von weniger als 2000 aufweist.

8. Polymerdispersion nach einem der vorhergehenden Ansprüche, **dadurch gekennzeichnet, dass** die Polymerpartikel in einpolymerisierter Form enthalten:
- 60-100 Gew.-%, bezogen auf die gesamten Monomereinheiten, C₁-C₁₂-Alkyl(meth)acrylate, vinylaromatische Verbindungen oder Vinylester von C₂- bis C₁₂-Monocarbonsäuren und
- 0-40 Gew.-% (Meth)acrylsäure, (Meth)acrylnitril, C₂- bis C₈-Hydroxy(meth)acrylat, (Meth)acrylamid oder Glycidyl(meth)acrylat.

9. Polymerdispersion nach einem der vorhergehenden Ansprüche, **dadurch gekennzeichnet, dass** der Polyelektrolyt und die Polymerpartikel in einem Gewichtsverhältnis auf Feststoffbasis von 5:1 bis 1:10 vorliegen.

10. Verfahren zur Herstellung einer Polymerdispersion nach einem der vorhergehenden Ansprüche, **dadurch gekennzeichnet, dass** man in einem wässrigen Medium wenigstens ein ethylenisch ungesättigtes Monomer in Gegenwart einer Kombination eines wasserlöslichen polymeren Polyelektrolyten, der entlang eines polymeren Gerüstes eine Vielzahl ionischer Gruppen einheitlichen Ladungscharakters oder hierzu ionisierbarer Gruppen trägt, und eines ionischen Tensids, das eine ionische Gruppe mit zu dem polymeren Polyelektrolyten entgegengesetztem Ladungscharakter oder eine hierzu ionisierbare Gruppe trägt, radikalisch polymerisiert.

11. Verwendung einer Polymerdispersion nach einem der Ansprüche 1 bis 9 als Bindemittel für Formkörper, textile Flächengebilde, Klebstoffe oder für Beschichtungszwecke.

12. Verfahren zum Herstellen von zwei- oder dreidimensionalen Gebilden, bei dem eine Polymerdispersion nach einem der Ansprüche 1 bis 9 mit einem teilchen- oder faserförmigen Substrat in Kontakt gebracht wird und einem Härtungsschritt unterzogen wird.

13. Verfahren zum Herstellen von zwei- oder dreidimensionalen Gebilden, bei dem eine Polymerdispersion nach einem der Ansprüche 1 bis 9, ein teilchen- oder faserförmiges Substrat und eine wässrige Phase miteinander in Kontakt gebracht werden, wobei die Polymerpartikel koaguliert werden, gegebenenfalls überschüssige wässrige Phase entfernt wird und das Gemisch von Substrat und koagulierten Polymerpartikeln einem Härtungsschritt unterzogen wird.

## Claims

1. A polymer dispersion comprising
i) polymer particles dispersed in an aqueous medium and composed of units of ethylenically unsaturated monomers,
ii) a water-soluble polymeric polyelectrolyte which along a polymeric backbone carries a large number of ionic groups of uniform charge character or groups which can be ionized to such groups, and
iii) an ionic surfactant which carries an ionic group having a charge character opposite to that of the polymeric polyelectrolyte, or a group which can be ionized to such a group, in an amount of 2.5-15% by weight, based on the total weight of the polymer dispersion.

2. A polymer dispersion as claimed in claim 1, wherein the polyelectrolyte and the ionic surfactant are in a weight ratio, based on solids, of from 20:1 to 1:1.

3. A polymer dispersion as claimed in claim 1 or 2, which additionally comprises a nonionic surfactant.

4. A polymer dispersion as claimed in claim 1, 2 or 3, wherein the polyelectrolyte is composed of units of ethylenically unsaturated monomers and 20-100% by weight, based on the total monomer units, of units of ethylenically unsaturated C₃-C₈ monocarboxylic acids; C₄-C₈ dicarboxylic acids or their monoesters; sulfonic acids; sulfuric monoesters or phosphonic acids and/or salts thereof, and the ionic surfactant is a quaternary ammonium salt having at least one hydrocarbon chain of at least 6 carbon atoms.

5. A polymer dispersion as claimed in claim 1, 2 or 3, wherein the polyelectrolyte is composed of units of ethylenically unsaturated monomers and 20-100% by weight, based on the total monomer units, of units of ethylenically unsaturated sulfonic acids, sulfuric monoesters or phosphonic acids and/or salts thereof and the ionic surfactant is an amine having at least one hydrocarbon chain of at least 6 carbon atoms, or a protonated form thereof.

6. A polymer dispersion as claimed in claim 1, 2 or 3, wherein the polyelectrolyte is composed of units of ethylenically unsaturated monomers and 20-100% by weight, based on the total monomer units, of units of monoethylenically unsaturated monomers which carry a quaternary ammonium group or a protonizable amino group.

7. A polymer dispersion as claimed in any of the preceding claims, wherein the polyelectrolyte has a degree of polymerization of less than 2000.

8. A polymer dispersion as claimed in any of the preceding claims, wherein the polymer particles contain in copolymerized form:
- 60-100% by weight, based on the total monomer units, of C₁-C₁₂ alkyl (meth)acrylates, vinylaromatic compounds, or vinyl esters of C₂-C₁₂ monocarboxylic acids, and
- 0-40% by weight of (meth)acrylic acid, (meth)acrylonitrile, C₂-C₈ hydroxy (meth)acrylate, (meth)acrylamide, or glycidyl (meth)acrylate.

9. A polymer dispersion as claimed in any of the preceding claims, wherein the polyelectrolyte and the polymer particles are in a weight ratio, based on solids, of from 5:1 to 1:10.

10. A process for preparing a polymer dispersion as claimed in any of the preceding claims, which comprises free-radically polymerizing at least one ethylenically unsaturated monomer in an aqueous medium in the presence of a combination of a water-soluble polymeric polyelectrolyte which along a polymeric backbone carries a large number of ionic groups of uniform charge character or groups which can be ionized to such groups, and an ionic surfactant which carries an ionic group having a charge character opposite to that of the polymeric polyelectrolyte, or a group which can be ionized to such a group.

11. The use of a polymer dispersion as claimed in any of claims 1 to 9 as a binder for moldings, sheetlike textile structures, or adhesives, or for coating purposes.

12. A method of producing two- or three-dimensional structures, which comprises contacting a particulate or fibriform substrate with a polymer dispersion as claimed in any of claims 1 to 9 and subjecting the substrate so treated to a curing step.

13. A method of producing two- or three-dimensional structures, which comprises contacting a polymer dispersion as claimed in any of claims 1 to 9, a particulate or fibriform substrate and an aqueous phase with one another, in the course of which the polymer particles become coagulated, removing any excess aqueous phase, and subjecting the mixture of substrate and coagulated polymer particles to a curing step.

## Revendications

1. Dispersion de polymères contenant
i) des particules polymères dispersées dans un milieu aqueux, constituées de motifs de monomères à insaturation éthylénique,
ii) un polyélectrolyte polymère soluble dans l'eau, qui le long d'un squelette polymère porte un grand nombre de groupes ioniques ayant un caractère de charge uniforme, ou des groupes ionisables en ces derniers, et
iii) un tensioactif ionique, qui porte un groupe ionique présentant le caractère de charge opposé à celui du polyélectrolyte polymère, ou un groupe ionisable en celui-là, dans une quantité de 2,5 à 15% en poids, par rapport au poids total de la dispersion de polymères.

2. Dispersion de polymères selon la revendication 1, **caractérisée en ce que** le polyélectrolyte et le tensioactif ionique sont présents selon un rapport en poids, sur la base de l'extrait sec, de 20:1 à 1:1.

3. Dispersion de polymères selon la revendication 1 ou 2, **caractérisée en ce qu'**elle contient en outre un tensioactif non ionique.

4. Dispersion de polymères selon la revendication 1, 2 ou 3, **caractérisée en ce que** le polyélectrolyte est constitué de motifs de monomères à insaturation éthylénique et est constitué de 20 à 100 % en poids, par rapport à la totalité des motifs monomères, de motifs d'acides monocarboxyliques en C₃-C₈ à insaturation éthylénique ; d'acides dicarboxyliques en C₄-C₈ ou de leurs semi-esters ; d'acides sulfoniques ; de semi-esters de l'acide sulfurique, ou d'acides phosphoniques et/ou de sels de ces derniers, et le tensioactif ionique est un sel d'ammonium quaternaire qui comporte au moins une chaîne hydrocarbonée ayant au moins 6 atomes de carbone.

5. Dispersion de polymères selon la revendication 1, 2 ou 3, **caractérisée en ce que** le polyélectrolyte est constitué de motifs de monomères à insaturation éthylénique et est constitué de 20 à 100 % en poids, par rapport à la totalité des motifs monomères, de motifs d'acides sulfoniques à insaturation éthylénique, de semi-esters de l'acide sulfurique ou d'acides phosphoniques et/ou de sels de ces derniers, et le tensioactif ionique est une amine qui comprend au moins une chaîne hydrocarbonée ayant au moins 6 atomes de carbone, ou une forme protonée de cette dernière.

6. Dispersion de polymères selon la revendication 1, 2 ou 3, **caractérisée en ce que** le polyélectrolyte est constitué de motifs de monomères à insaturation éthylénique et est constitué de 20 à 100 % en poids, par rapport à la totalité des motifs monomères, de motifs de monomères à insaturation monoéthylénique qui portent un groupe ammonium quaternaire ou un groupe amino protonable.

7. Dispersion de polymères selon l'une des revendications précédentes, **caractérisée en ce que** le polyélectrolyte a un degré de polymérisation inférieur à 2000.

8. Dispersion de polymères selon l'une des revendications précédentes, **caractérisée en ce que** les particules polymères contiennent sous forme polymérisée :
- 60 à 100 % en poids, par rapport à la totalité des motifs monomères, de (méth)acrylates d'alkyle en C₁-C₁₂, de composés vinylaromatiques ou d'esters vinyliques d'acides monocarboxyliques en C₂-C₁₂, et
- 0 à 40 % en poids d'acide (méth)acrylique, de (méth)acrylonitrile, d'hydroxy(méth)acrylate en C₂-C₈, de (méth)acrylamide ou de (méth)acrylate de glycidyle.

9. Dispersion de polymères selon l'une des revendications précédentes, **caractérisée en ce que** le polyélectrolyte et les particules polymères sont présents selon un rapport en poids, sur la base de l'extrait sec, de 5:1 à 1:10.

10. Procédé de préparation d'une dispersion de polymères selon l'une des revendications précédentes, **caractérisé en ce qu'**on soumet à une polymérisation radicalaire, dans un milieu aqueux, au moins un monomère à insaturation éthylénique, en présence d'une combinaison d'un polyélectrolyte polymère soluble dans l'eau, qui le long d'un squelette polymère porte un grand nombre de groupes ioniques ayant un caractère de charge uniforme, ou de groupes ionisables en ces derniers, et d'un tensioactif ionique, qui porte un groupe ionique présentant un caractère de charge opposé à celui du polyélectrolyte polymère, ou un groupe ionisable en celui-là.

11. Utilisation d'une dispersion de polymères selon l'une des revendications 1 à 9 en tant que liant pour objet moulé, structures textiles bidimensionnelles, adhésifs, ou à des fins de revêtement.

12. Procédé de préparation de structures bi- ou tridimensionnelles, dans lequel on met en contact une dispersion de polymères selon l'une des revendications 1 à 9 avec un substrat particulaire ou fibreux, et on le soumet à une étape de durcissement.

13. Procédé de préparation de structures bi- ou tridimensionnelles, dans lequel on met en contact les uns avec les autres une dispersion de polymères selon l'une des revendications 1 à 9, un substrat particulaire ou fibreux et une phase aqueuse, ce à l'occasion de quoi les particules polymères subissent une coagulation, la phase aqueuse éventuellement en excès est éliminée, et le mélange du substrat et des particules polymères coagulées est soumis à une étape de durcissement.
